# EUROPEAN PATENT APPLICATION

(11) **EP 2 639 853 A2**
(43) Date of publication of application: **18.09.2013**
(21) Application number: 13158205.8
(22) Date of filing: 07.03.2013
(51) Int. Cl.: H01M 2/10, H01M 10/04

(54) **Secondary battery device**

(30) Priority: 14.03.2012 JP 2012057519
(71) Applicant: Kabushiki Kaisha Toshiba, Minato-ku, Tokyo 105-8001 (JP)
(72) Inventor: Shimizu, Hideo, TOKYO, Tokyo 105-8001 (JP); Koike, Noboru, TOKYO, Tokyo 105-8001 (JP); Murai, Takashi, TOKYO, Tokyo 105-8001 (JP); Nagase, Yasuyuki, TOKYO, Tokyo 105-8001 (JP); Shudo, Tadashi, TOKYO, Tokyo 105-8001 (JP); Nawa, Satoru, SAITAMA-SHI, Saitama 331-8633 (JP); Kobayashi, Takashi, SAITAMA-SHI, Saitama 331-8633 (JP); Kuroda, Kazuyuki, SAITAMA-SHI, Saitama 331-8633 (JP)
(74) Representative: Lind, Urban Arvid Oskar

(57) **Abstract**

According to one embodiment, a secondary battery device includes a secondary battery cell (14), a case (12) configured to accommodate the secondary battery cell, and foam coating layers (40, 50) sandwiched between an outer surface of the secondary battery cell and an inner surface of the case and configured to hold the secondary battery cell.

## Description

### FIELD

Embodiments described herein relate to a secondary battery device comprising a plurality of secondary battery cells.

### BACKGROUND

In recent years, attention has been paid to a secondary battery, for example, to a lithium ion secondary battery that is a nonaqueous secondary battery as a power supply of an electric vehicle, a hybrid electric vehicle, an electric moped or as a power supply of electrical equipment because the secondary battery has an high output and a high energy density.

In general, a secondary battery is configured as a battery cell including an exterior vessel, an electrode group accommodated in the exterior vessel together with an electrolyte, and an electrode terminal disposed to the exterior vessel. To obtain a large capacity and a high output, a battery module is configured by disposing a plurality of battery cells in an outer case side by side and connecting battery cells in series or in parallel and further a battery pack is configured by connecting a plurality of battery modules.

In the battery module, a resin is employed as a material of the outer case for the purpose of insulating the battery cell. The outer case is configured to cover the battery cells and the respective battery cells are mounted in a frame disposed to the outer case side. However, from a viewpoint of an assembly property when the battery cells are inserted, since a dimensional tolerance cannot help being increased, slight intervals exist between the battery cells and the outer case. When the intervals exist between the battery cells and the outer case, the battery cells are vibrated in the intervals between them and the outer case due to vibration in operation and thus a relative displacement is generated between the cells. In the case, since a load acts on a bus-bar attached to terminals of the battery cells and on junctions between the bus-bar and the terminals, there is a possibility that the bus-bar and the junctions are broken or damaged. Accordingly, a method of filling the intervals between the battery cells and the outer case with an adhesive and fixing the battery cells is employed. Otherwise, a method of pressing the battery cells in a stacked direction by bolt, presser member, and the like and fixing the battery cells is used.

However, since a process for filling the adhesive is additionally required, it is difficult to reduce an assembly time of the battery module. It is preferable to employ fixing that does not depend on an adhesive from a point of view of maintaining reliability of a secondary battery device over a long period. Likewise, it is also difficult to reduce an assembly time of the battery module also in a case that battery cells are fixed by bolt, presser member, and the like.

### BRIEF DESCRIPTION OF THE DRAWINGS

FIG. 1 is a perspective view illustrating a secondary battery device according to an embodiment;
FIG. 2 is an exploded perspective view illustrating a case main body, a battery cell group, and an upper case of the secondary battery device;
FIG. 3 is a perspective view illustrating an inner surface side of the upper case;
FIG. 4 is a perspective view illustrating a bottom wall side of the case main body in a broken fashion;
FIG. 5 is a sectional view of the secondary battery device along line V-V of FIG. 1;
FIG. 6 is a sectional view illustrating an engaging state of a bottom wall of the case main body with a battery cell in enlargement;
FIG. 7 is a sectional view of the secondary battery device along line VII-VII of FIG. 1;
FIG. 8 is a sectional view illustrating an engaging state of the case main body and an upper case with a battery cell in enlargement;
FIG. 9 is an exploded sectional view illustrating the case main body, battery cell, and upper case;
FIG. 10 is a table showing a plurality of examples of a foaming paint for forming a foam coating layer in the secondary battery device and an evaluation thereof; and
FIG. 11 is a perspective view illustrating a battery cell of a secondary battery device according to another embodiment.

### DETAILED DESCRIPTION

Various embodiments will be described hereinafter with reference to the accompanying drawings. In general, according to one embodiment, a secondary battery device comprises a secondary battery cell; a case configured to accommodate the secondary battery cell; and foam coating layers sandwiched between an outer surface of the secondary battery cell and an inner surface of the case and configured to hold the secondary battery cell.

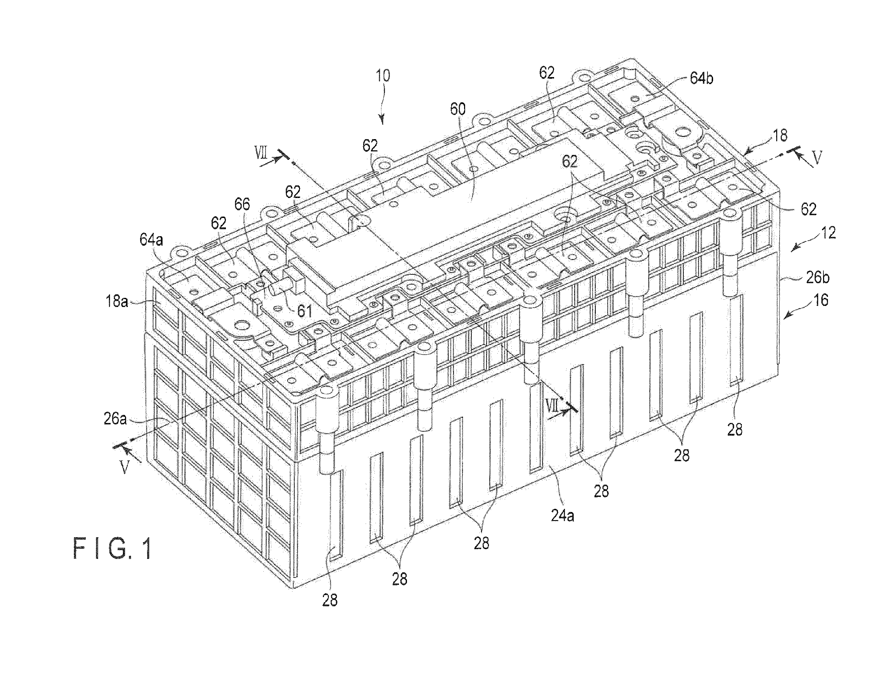

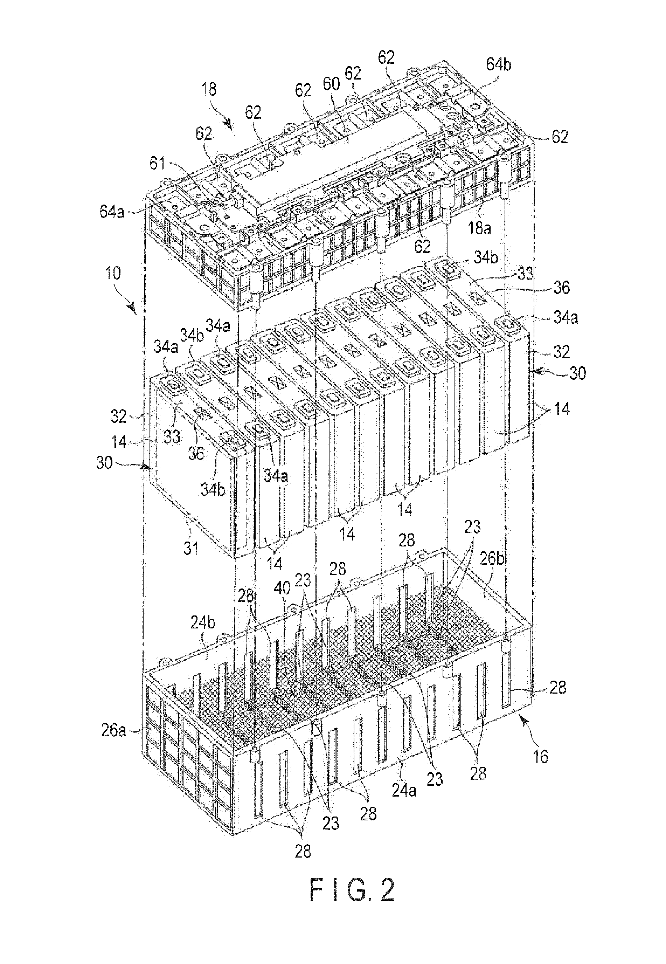

FIG. 1 is a perspective view illustrating an outside appearance of a secondary battery device according to a first embodiment, and FIG. 2 is an exploded perspective view illustrating a case main body, a battery cell group inside of the secondary battery device, and a top cover.

As shown in FIGS. 1 and 2, the secondary battery device 10 comprises, for example, a rectangular box-shaped case 12, a plurality of battery cells (secondary battery cells) 14, for example, 12 battery cells 14 accommodated in the case side by side, and a battery monitor substrate 66 for detecting the voltage and the temperature of the respective battery cells and is configured as a battery module (assembled battery). Electrode terminals of adjacent battery cells 14 are electrically connected to each other by a bus-bar as a conductive member.

The case 12 comprises a rectangular box-shaped case main body 16 having an upper surface opened as well as a bottom wall, an upper case 18 for covering the open upper surface of the case main body, and further a not illustrated top cover which are formed of a synthetic resin having an insulation property, for example, polycarbonate (PC) polyphenylene ether (PPE), and the like, respectively.

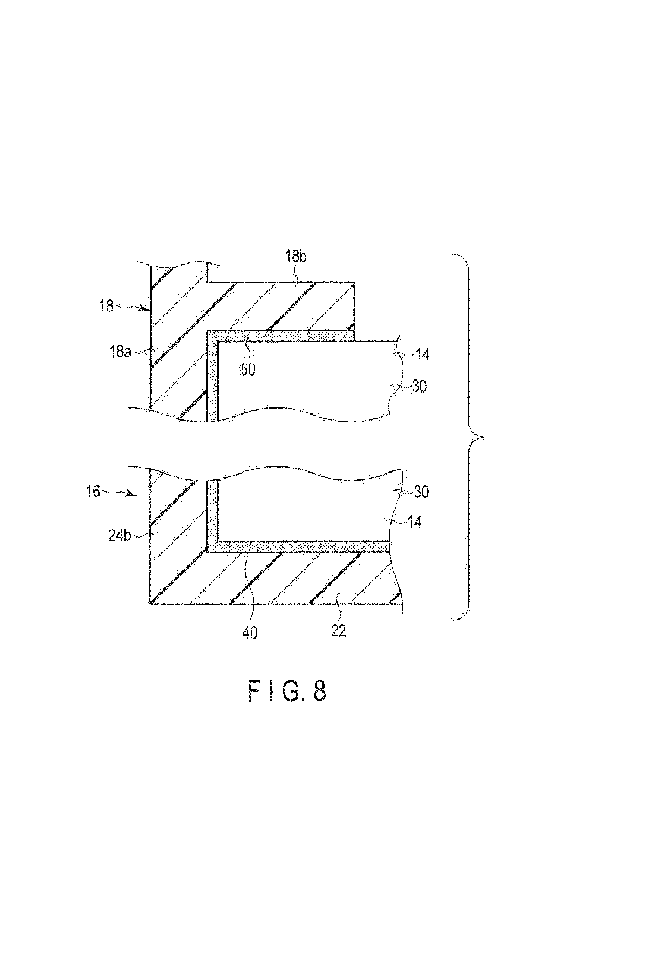

FIG. 8 illustrates a cross section of the secondary battery device including the battery cells 14. As shown in FIGS. 2 and 8, each battery cell 14 is a nonaqueous electrolyte secondary battery, for example, a lithium ion battery and the like and includes a flat and approximately rectangular parallelepiped-shaped exterior vessel 30 formed of aluminum or aluminum alloy and an electrode body 31 accommodated in the exterior vessel 30 together with an nonaqueous electrolyte. The exterior vessel 30 has a vessel main body 32 having an upper end opened and a rectangular sheet-shaped lid member 33 welded to the vessel main body and closing the opening of the vessel main body, and an inside of the exterior vessel 30 is formed to be liquid-tight. The electrode body 31 is wound with, for example, a positive electrode plate and negative electrode plate in a swirl state with a separator interposed therebetween and further is formed in a flat rectangular shape by being compressed in a radial direction.

A positive electrode terminal 34a and a negative electrode terminal 34b are disposed to both ends of the lid member 33 in a longitudinal direction, respectively and projects from the lid member. The positive electrode terminal 34a and the negative electrode terminal 34b are connected to a positive electrode and a negative electrode of the electrode body 31, respectively. One of the terminals, for example, the positive electrode terminal 34a is electrically connected to the lid member 33 and becomes the same potential as that of the exterior vessel 30. The negative electrode terminal 34b extends passing through the lid member 33. A seal member composed of an insulator such as a synthetic resin, glass, and the like, for example, a gasket is interposed between the negative electrode terminal 34b and the lid member 33b.

A safety valve 36 having, for example, a rectangular shape is formed in a central portion of the lid member 33. The safety valve 36 is formed of a thin-wall portion created by forming a part of the lid member 33b to a thickness about half that of the original thickness and a plurality of carved seals are formed in a central portion of an upper surface of the thin-wall portion. When a gas is generated in the exterior vessel 30 by an abnormal mode of the battery cells 14 and the like and the internal pressure in the exterior vessel is increased to a predetermined value or higher, the safety valve 36 is opened and a failure such as an explosion and the like of the exterior vessel 30 is prevented by reducing the internal pressure.

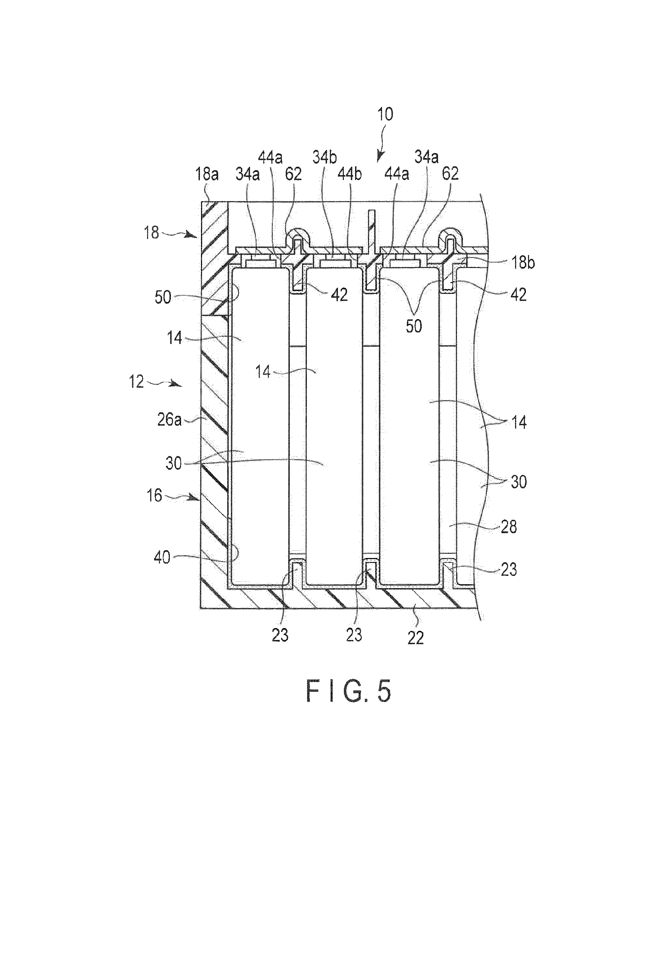

As shown in FIGS. 2 and 5, the plurality of battery cells 14 are disposed side by side in a row in a state in which the main surfaces of the exterior vessels 30 confront each other at predetermined intervals, as well as upper ends of the exterior vessels 30, to which the electrode terminals 34a, 34b are disposed, face in the same direction.

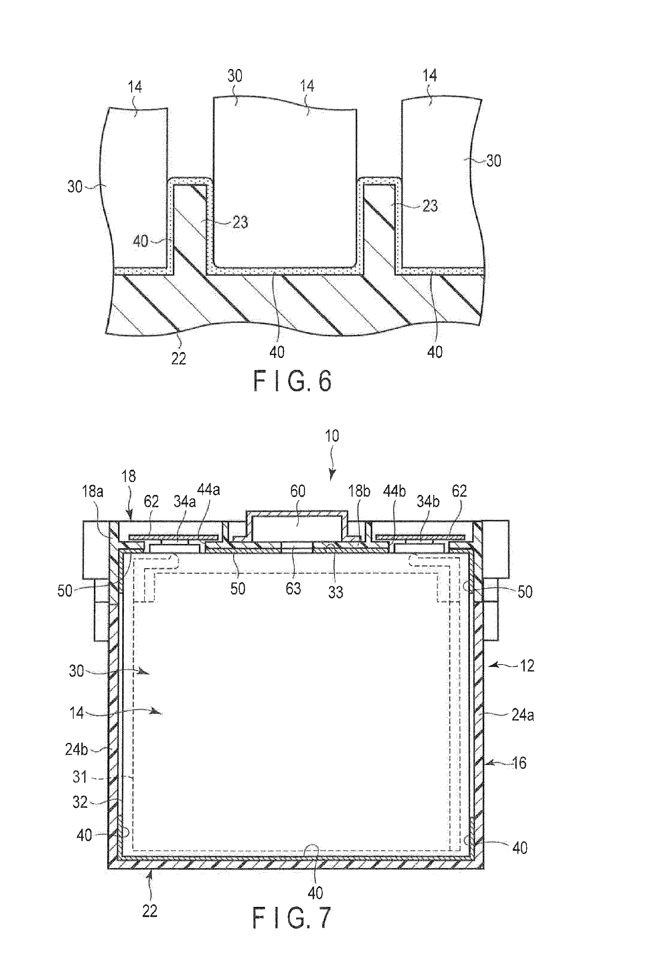

Next, a configuration of the case 12 will be described in detail. As shown in FIGS. 1, 2, 5, and 7, the case main body 16 has a rectangular bottom wall 22 formed in a size corresponding to the 12 battery cells 14 and confronting bottoms of the 12 battery cells 14, a pair of first sidewalls 24a, 24b standingly disposed along two confronting side edges of the bottom wall 22, here, along a long side and confronting side surfaces of the battery cells 14, and a pair of second sidewalls 26a, 26b standingly disposed along the other two side edges of the bottom wall 22, here, along a short side and confronting the main surfaces of the battery cells 14.

A plurality of partition plates 23, for example, 11 partition plates 23 stand on the bottom wall 22. The partition plates 23 are formed in an elongated rectangular shape and confront the second sidewalls 26a, 26b approximately in parallel therewith as well as disposed side by side at predetermined intervals in a longitudinal direction of the bottom wall 22. Both end edges and lower edges of the respective the partition plates 23 are coupled with inner surfaces of the pair of the first sidewalls 24a, 24b and an inner surface of the bottom wall 22, respectively. The partition plates 23 may be molded integrally with the case main body 16 or the partition plates formed separately may be fixed to the case main body.

A plurality of accommodation portions, here, 12 accommodation portions for accommodating lower end portions of the battery cells 14 are prescribed by the bottom wall 22, the first sidewalls 24a, 24b, and the second sidewalls 26a, 26b or by the partition plates 23. Each accommodation portion is formed in a slender rectangular shape corresponding to a cross-sectional shape of the exterior vessel 30 of the battery cell 14 and extends along a width direction of the case main body 16. The plurality of accommodation portions are disposed side by side at predetermined intervals in a longitudinal direction of the case main body 16.

As shown in FIGS. 1 and 2, the pair of the first sidewalls 24a, 24b extending in the longitudinal direction of the case main body 16 is formed with a plurality of ventilation holes 28, respectively. Each ventilation hole 28 is formed in, for example, a slender rectangular shape at a position where it stands in a row with each partition plate 23 and extends along a height direction of the case main body 16. That is, the respective ventilation holes 28 are disposed at positions where they confront the intervals between the plurality of battery cells 14 accommodated in the case 12. Cooling air can be supplied into the case 12 as well as to a periphery of the battery cells 14 via the ventilation holes 28.

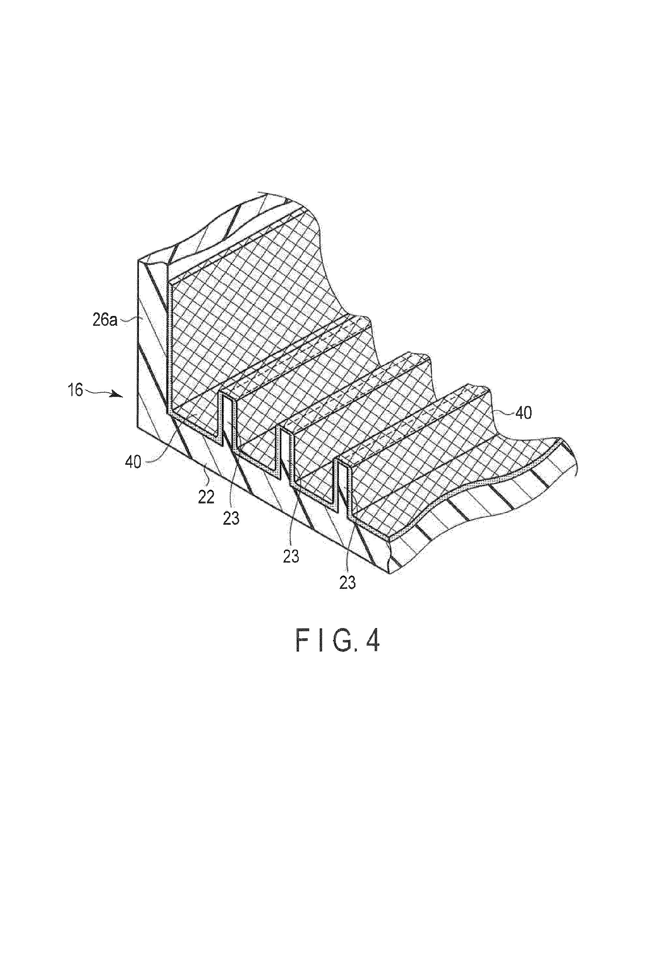

As shown in FIGS. 2, 4, and 5 to 8, a foaming paint is coated on an inner surface of the case main body 16 and a foam coating layer is formed. In the embodiment, the foaming paint is coated on an inner surface of the bottom wall 22, the partition plates 23, lower inner surfaces of the first sidewalls 24a, 24b, and lower inner surfaces of the second sidewalls 26a, 26b and forms the foam coating layer 40 having a predetermined thickness, for example, a thickness of about 300 µm to 1 mm. After a temperature foaming paint or humidity foaming paint has been previously coated on the inner surface of the case main body 16, foaming agents in the foaming paint are foamed by being applied with a predetermined temperature or humidity, and the foam coating layer 40 including a number of independent bubbles is formed. The foaming magnification of the foaming paint can be adjusted by adjusting the temperature or humidity applied to the foaming paint.

The foam coating layer 40 can adjust the reactive force by the number of independent bubbles and the foaming magnification can be changed by the mixing ratio of a main agent (binder) and the foaming agent (foaming beads). The foam coating layer 40 can elastically press and positionally fix the battery cells 14 by its frictional force and compression reactive force of the bubbles. The foaming paint and the foaming agent will be explained later in detail.

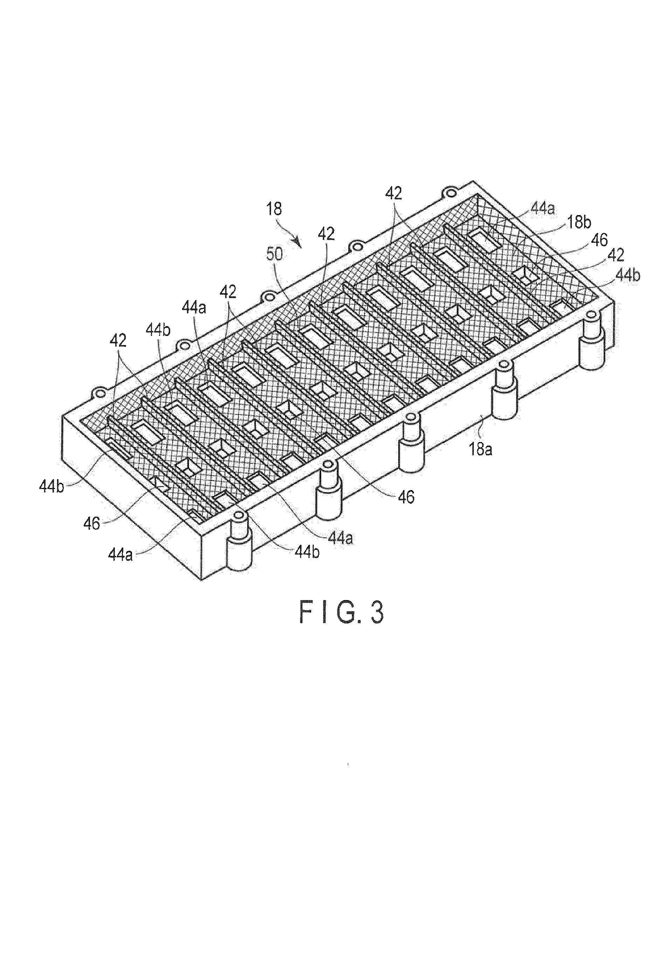

As shown in FIGS. 3, 5, and 7, the upper case 18 has a rectangular frame member 18a and a rectangular ceiling wall 18b that positions in an intermediate portion in a height direction of the frame member integrally therewith. A plurality of partition plates 42, for example, 11 partition plates 42 are standingly disposed on an inner surface of the ceiling wall 18b. The partition plates 42 are formed in a slender rectangular shape, respectively, extend in parallel in a width direction of the ceiling wall 18b as well as are disposed side by side at predetermined intervals in a longitudinal direction of the ceiling wall 18b. Both the end edges of each partition plate 42 in its axis direction and an upper edge of the each partition plate 42 are coupled with an inner surface of the frame member 18a and the inner surface of the ceiling wall 18b, respectively. The partition plates 42 may be molded integrally with the upper case 18 or the partition plates 42 molded separately may be fixed to the upper case.

A plurality of accommodation portions, here, 12 accommodation portions for accommodating upper end portions of the battery cells 14 are defined by the ceiling wall 18b, the frame member 18a, and the partition plates 42. Each accommodation portion is formed in a slender rectangular shape corresponding to a cross-sectional shape of the exterior vessel 30 of the battery cell 14 and extends along a width direction of the case 12. The plurality of accommodation portions are disposed side by side in a longitudinal direction of the case 12 at predetermined intervals.

In the upper case 18, bottoms of the respective accommodation portions, that is, the ceiling wall 18b is formed with rectangular transparent holes 44a, 44b corresponding to the positive electrode terminals 34a and the negative electrode terminals 34b of the battery cells 14 and further formed with exhaust holes 46 confronting the safety valves 36 of the battery cells 14, The transparent holes 44a, 44b are positioned on both end portions of the accommodation portions, and the exhaust holes 46 position at the centers between the transparent holes 44a, 44b.

As shown in FIGS. 3, 5, 7, and 8, in the embodiment, the foaming paint is coated on an inner surface of the upper case 18 and a foam coating layer 50 is formed. The foaming paint is coated on the inner surface of the frame member 18a, the inner surface of the ceiling wall 18b, and the partition plates 42 and forms the foam coating layer 50 having a predetermined thickness, for example, a thickness of about 300 µm to 1 mm. After a temperature foaming paint or humidity foaming paint has been previously coated on the inner surface of the upper case 18, a foaming agent in the foaming paint is foamed by being applied with a predetermined temperature or humidity, and the foam coating layer 50 including a number of independent bubbles is formed. The foaming magnification of the foaming paint can be adjusted by adjusting the temperature or humidity applied to the foaming paint. The foam coating layer 50 is the same as the foam coating layer 40 on the case main body 16 side described above and can elastically press and positionally fix the battery cells 14 by the compression reactive force and frictional force of the bubbles. Note that a plurality of recesses may be formed in a coating region of a case inner surface so that the foaming paint is easily adhered to the coating region.

The upper case 18 configured as described above is caused to cover the upper surface opening of the case main body 16 and fixed to upper ends of sidewalls of the case main body 16 by screw. With configuration, the upper case 18 constitutes the ceiling wall and upper portions of respective sidewalls of the case 12.

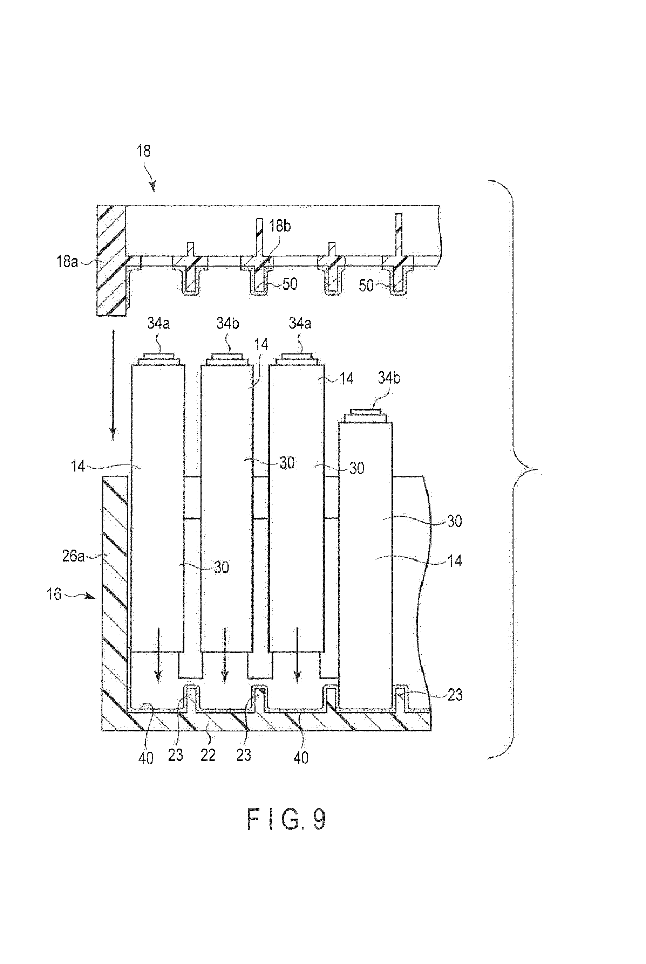

As shown in FIG. 9, at the time of assembly, the battery cells 14 are inserted into the case main body 16 from the upper opening of the case main body and the lower end portions of the battery cells 14 are pushed into corresponding accommodation portions on the bottom wall 22 side. An outer surface of the lower end portion of the battery cell 14 comes into intimate contact with the foam coating layer 40 and is pushed to a predetermined position while compressing the foam coating layer 40. With the operation, the foam coating layer 40 is sandwiched between the outer surface of the battery cell 14 and the inner surface of the case 12 in a compressed state.

After the 12 battery cells 14 have been mounted in the case main body 16, the upper case 18 is caused to cover the case main body 16 and fixed to the case main body by screw. At the time, the upper end portion of each battery cell 14 is pushed into a corresponding accommodation portion of the upper case 18, and the outer surface of the upper end portion of the battery cell 14 comes into intimate contact with the foam coating layer 50 and is pushed to a predetermined position while compressing the foam coating layer 50. With the operation, the foam coating layer 50 is sandwiched between the outer surface of the battery cell 14 and the inner surface of the case 12 in a compressed state.

As shown in FIGS. 5 to 8, the 12 battery cells 14 are accommodated in the case 12, respectively and disposed side by side in a row each other at the intervals. The foam coating layer 40 is sandwiched between the outer surface of the lower end portion of each battery cell 14 and the inner surface of the case. Further, the foam coating layer 50 is sandwiched between the outer surface of the upper end portion of each battery cell 14 and the inner surface of the case. Each battery cell 14 receives a reactive force from the foam coating layers 40, 50 from six directions, i.e., from both up-and-down sides, both right-and-left sides, and both front-and-back sides and further is positioned and kept at the predetermined position by the frictional force between the battery cell 14 and the foam coating layers without backlash. At the same time, vibration acting on the battery cell 14 is absorbed by the foam coating layers 40, 50.

As shown in FIGS. 1, 2, 5, and 7, upper end positions of the plurality of battery cells 14, in particular, height positions of the electrode terminals 34a, 34b are determined by abutting the plurality of battery cells 14 on the inner surface of the upper case 18. With the configuration, the plurality of battery cells 14 are disposed in a uniform state without dispersion of height positions of the electrode terminals. The positive electrode terminal 34a and the negative electrode terminal 34b of each battery cell 14 are inserted into the corresponding transparent holes 44a, 44b of the ceiling wall 18b, respectively and are exposed upward. The safety valve 36 of each battery cell 14 confronts the exhaust hole 46 of the ceiling wall 18b.

The plurality of battery cells 14 are electrically connected in, for example, series by a plurality of bus-bars 62 as conductive members. The plurality of battery cells 14 are disposed in a direction where the positive electrode terminals and the negative electrode terminals of adjacent battery cells 14 are alternately disposed. Each bus-bar 62 is formed of a metal plate composed of a conductive material, for example, aluminum and the like. Each bus-bar 62 has one end portion joined to the positive electrode terminal 34a of a battery cell 14 and the other end portion jointed to the negative electrode terminal 34b of an adjacent battery cell 14 to thereby electrically connect the electrode terminals. As described above, the 12 battery cells 14 are connected in series by the plurality of bus-bars 62. Note that the plurality of battery cells 14 are not limited to being connected in series and may be connected in parallel.

In the plurality of battery cells 14, the positive electrode terminal 34a of the battery cell 14 positioned at one end of an arrangement and the negative electrode terminal 34b of the battery cell 14 positioned at the other end of the arrangement are connected with output terminals 64a, 64b, respectively. As shown in FIGS. 1 and 2, the upper case 18 is installed with the battery monitor substrate 66 for detecting the voltage and temperature of the battery cells 14 and electrically connected to the respective bus-bars 62 and output terminals 64. Further, the upper case 18 is installed with an exhaust pipe 60 that communicates with the exhaust holes 46 formed on the upper case.

Next, examples of the foaming paint and foaming agent that form the foam coating layer will be explained in detail.

The foaming paint contains foaming particles and a binder component. The foaming particles are foamed by being heated and form foamed beads. The foamed beads and the binder component are contained in the foam coating layer molded by heat-foaming.

A binder resin used as the binder component in the examples contains polyol containing a hydroxyl group and a curing agent containing an isocyanate group (an isocyanate crosslinking agent). As the polyol, for example, polycarbonate polyol, polyester polyol, and the like can be used. As the isocyanate crosslinking agent, hexamethylene diisocyanurate (HMDI nurate) can be used.

The foaming paint used in the examples contains 3-20% foaming resin particles to a resin solid content of the binder component. The temperature of a foaming temperature region of the foaming resin particles at which they can be used is 70 to 160°C. The foaming paint can further contain a tin catalyst, for example, dibutyltin dilaurate (DBTDL) and the like.

The universal hardness of a coating film obtained by coating a paint in which the foaming particles are excluded from the foaming paint is preferably 10.0 N/mm² or less. Further, the elastic deformation ratio (We/Wtot) of the coating film is preferably 80% or more.

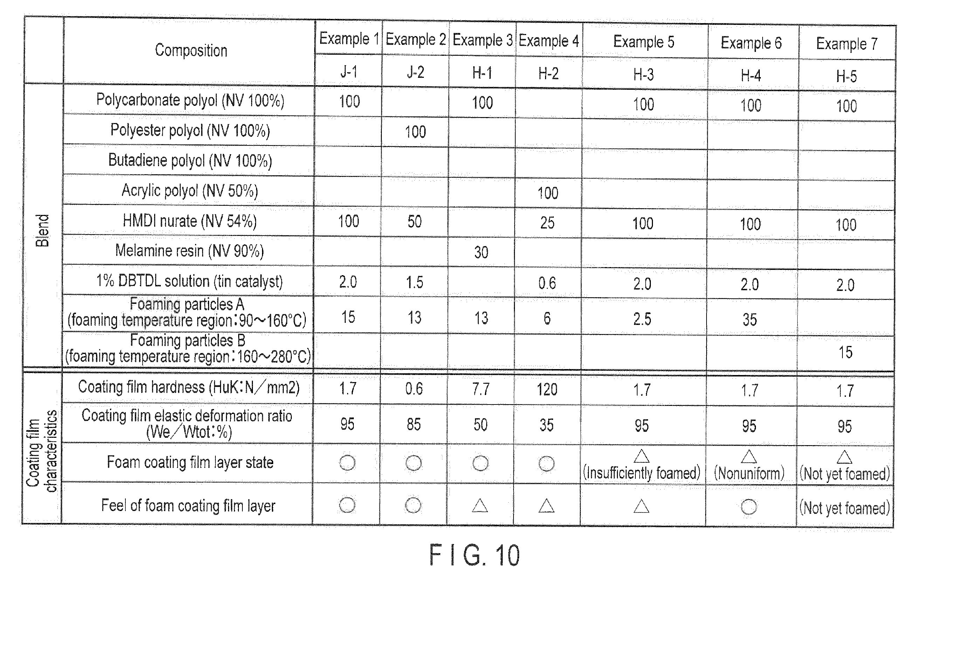

The plurality of examples are shown below and a foam coating layer used in the examples will be specifically explained. A result obtained in the respective examples is shown in Table 1 of FIG. 10.

### (Example 1)

### Composition of foaming paint J-1

Polycarbonate polyol (solid content amount 100%) ... 100 parts by weight

Hexamethylene diisocyanurate (solid content amount 54%) ... 100 parts by weight

Foaming particles having a foaming temperature region of 90 to 160°C ... 15 parts by weight
a 1% solution of dibutyltin dilaurate ... 2.0 parts by weight

Foaming paint J-1 having the composition described above was prepared, and a foam coating layer having a thickness of 300 µm was formed by spraying the foaming paint on a test piece composed of a polycarbonate (PC) material that can be used to a case main body using a high-pressure spray gun and subsequently foaming a coating film by heating the coating film in an atmosphere of 120°C for 7 minutes. The thickness of the coating film was measured by a soft-touch microgauge. The tolerance was ±100 µm.

The degree and uniformity of foaming were observed as the state of the obtained foam coating layer, and the foam coating layer was indicated by ○ when foaming was sufficiently performed and uniform, whereas the foam coating layer was indicated by Δ when foaming was executed insufficiently or nonuniformly or was not yet executed. It was found that uniform foaming was executed sufficiently on the obtained foam coating layer.

Further, when the foam coating layer was confirmed, the feel of the foam coating layer was evaluated. A case that a foaming state was uniform and a sufficient reactive force could be obtained from the foam coating layer at the time it was pressed by a finger was indicated by o, whereas a case that although uniform foaming was obtained, a sufficient reactive force could not be obtained because the coating film was hard, a case that foaming was insufficient and a reactive force could not be obtained, or a case that foaming lacks uniformity and a stable reactive force could not be obtained was indicated by Δ.

When a coating film was formed by coating a paint having a composition in which the foaming particles were excluded from foaming paint J-1 and the universal hardness HuK of the coating film was measured, the hardness was 1.7 N/mm². Further, when the elastic deformation ratio (We/Wtot) of a similar coating film was measured, the ratio was 95%.

### (Example 2)

### Composition of foaming paint J-2

Polyester polyol (solid content amount 100%) ... 100 parts by weight

Hexamethylene diisocyanurate (solid content amount 54%) ... 50 parts by weight

Foaming particles having a foaming temperature region of 90 to 160°C ... 13 parts by weight

A 1% solution of dibutyltin dilaurate ... 1.5 parts by weight

When a foam coating layer was formed as in example 1 except that foaming paint J-2 having the above composition was used and the state of the foam coating layer was evaluated in the same way, it was found that uniform foaming was executed sufficiently. Further, when the feel of the foam coating layer was evaluated, it was found that a sufficient reactive force could be obtained at the time the foam coating layer was pressed by a finger.

Further, when the universal hardness HuK and elastic deformation ratio (We/Wtot) of a coating film coated with a paint having a composition in which the foaming particles were excluded from foaming paint J-2, the universal hardness and the elastic deformation ratio were 0.6 N/mm² and 85%, respectively.

### (Example 3)

### Paint H-1

Polycarbonate polyol (solid content amount 100%) ... 100 parts by weight

Melamine resin (solid content amount 90%) ... 30 parts by weight

Foaming particles having a foaming temperature region of 90 to 160°C ... 13 parts by weight

When a foam coating layer was formed as in example 1 except that foaming paint H-1 having the above composition was used and the state of the foam coating layer was evaluated in the same way, it was found that uniform foaming was executed sufficiently. Further, when the feel of the foam coating layer was evaluated, it was found that a sufficient reactive force could be obtained even if the foam coating layer was pressed by a finger because the coating film was hard.

Further, when the universal hardness HuK and elastic deformation ratio (We/Wtot) of a coating film coated with a paint having a composition in which the foaming particles were excluded from foaming paint H-1, the universal hardness and the elastic deformation ratio were 7.7 N/mm² and 50%, respectively. It was found from example 3 that there was a tendency for the elastic deformation ratio to be reduced by changing the crosslinking agent from the isocyanate crosslinking agent to the melamine resin.

### (Example 4)

### Paint H-2

Acrylic polyol (solid content amount 100%) ... 100 parts by weight Hexamethylene diisocyanurate (solid content amount 54%) ... 25 parts by weight

A 1% solution of dibutyltin dilaurate ... 0.6 parts by weight
Foaming particles having a foaming temperature region of 90 to 160°C ... 6 parts by weight

When a foam coating layer was formed as in example 1 except that foaming paint H-2 having the above composition was used and the state of the foam coating layer was evaluated in the same way, it was found that uniform foaming was executed sufficiently. Further, when the feel of the foam coating layer was evaluated, it was found that a sufficient reactive force could be obtained even if the foam coating layer was pressed by a finger because the coating film was hard.

Further, when the universal hardness HuK and elastic deformation ratio (We/Wtot) of a coating film coated with a paint having a composition in which the foaming particles were excluded from foaming paint H-2, the universal hardness and the elastic deformation ratio were 120 N/mm² and 35%, respectively.

It was found from example 4 that the universal hardness was increased and the elastic deformation ratio was reduced by changing polyol to acrylic polyol.

### (Example 5)

### Paint H-3

Polycarbonate polyol (solid content amount 100%) ... 100 parts by weight

Hexamethylene diisocyanurate (solid content amount 54%) ... 100 parts by weight
a 1% solution of dibutyltin dilaurate ... 2.0 parts by weight

Foaming particles having a foaming temperature region of 90 to 160°C ... 2.5 parts by weight

When a foam coating layer was formed as in example 1 except that foaming paint H-3 having the above composition was used and the state of the foam coating layer was evaluated in the same way, it was found that foaming was executed insufficiently. Further, when the feel of the foam coating layer was evaluated, it was found that a sufficient reactive force could not be obtained even if the foam coating layer was pressed by a finger because foaming was executed insufficiently.

Further, when the universal hardness HuK and elastic deformation ratio (We/Wtot) of a coating film coated with a paint having a composition in which the foaming particles were excluded from foaming paint H-3, the universal hardness HuK and the elastic deformation ratio were 1.7 N/mm² and 95%, respectively.

It was found from example 5 that when an amount of the foaming particles in the foaming paint was excessively small, there was a tendency for the foaming property to be reduced and it was difficult to obtain a sufficient foaming state.

### (Example 6)

### Paint H-4

Polycarbonate polyol (solid content amount 100%) ... 100 parts by weight

Hexamethylene diisocyanurate (solid content amount 54%) ... 100 parts by weight

A 1% solution of dibutyltin dilaurate ... 2.0 parts by weight

Foaming particles having a foaming temperature region of 90 to 160°C ... 35 parts by weight

When a foam coating layer was formed as in example 1 except that foaming paint H-4 having the above composition was used and the state of the foam coating layer was evaluated in the same way, it was found that foaming was nonuniform. Further, when the feel of the foam coating layer was evaluated, it was found that irregularity was caused to foaming and the film thickness of the foam coating layer and uniformity of reactive force of the foam coating layer at the time it was pressed by a finger were reduced.

Further, when the universal hardness HuK and elastic deformation ratio (We/Wtot) of a coating film coated with a paint having a composition in which the foaming particles were excluded from foaming paint H-4, the universal hardness and the elastic deformation ratio were the same as those of example 5.

It was found that an amount of the foaming particles in the foaming paint was excessively large, there was a tendency for the foaming property to become excessively high and foaming to become nonuniform.

### (Example 7)

### Paint H-5

Polycarbonate polyol (solid content amount 100%) ... 100 parts by weight

Hexamethylene diisocyanurate (solid content amount 54%) ... 100 parts by weight
a 1% solution of dibutyltin dilaurate ... 2.0 parts by weight

Foaming particles having a foaming temperature region of 160 to 280°C ... 15 parts by weight

Although a coating film was heated in an atmosphere of 120°C for 7 minutes using foaming paint H-5 having the above composition as in example 1, no foaming was caused.

Further, the universal hardness HuK and elastic deformation ratio (We/Wtot) of a coating film coated with a paint in which the foaming particles were excluded from foaming paint H-5 were the same as those of example 5.

It was found that when the temperature of a foaming temperature region of foaming particles in the foaming paint was excessively high the foaming particles were not foamed under a dry condition in the atmosphere of 120°C.

According to the secondary battery device configured as described above, the battery module having the case 12 in which the battery cells 14 are accommodated can be assembled only by mounting the battery cells 14 in the respective accommodation portions of the case main body 16 and attaching the upper case 18 from thereabove. At the time, the foam coating layers 40, 50 formed on the inner surface of the case 12 come into intimate contact with the outer surfaces of the battery cells 14 and press the battery cells from the 6 directions to thereby support and keep the battery cells in the accommodation portions without backlash as previously determined. With the configuration, the plurality of battery cells can be held without backlash without using adhesive or a fixing bolt. Accordingly, when the secondary battery device is assembled, the assembly time can be reduced by omitting the adhesive coating process, adhesive curing process, or bolting process. At the same time, since the battery cells can be supported without backlash for a long period without depending on adhesive, reliability can be improved. Further, since vibration acting on the battery cells 14 is absorbed by the foam coating layers 40, 50, the battery cells can be suppressed from being positionally offset.

Further, since battery cells are not fixed by adhesive, the battery cells can be easily removed from the case, with a result that the secondary battery device can be disassembled and the battery cells can be replaced as maintenance of the secondary battery device.

From what has been described above, the secondary battery device that is compact and has an improved assembly property and reliability can be obtained.

Note that, in the examples described above, although the foam coating layer formed on the inner surface of the case is configured to confront the six surfaces of the battery cell, the examples are not limited thereto and the foam coating layer may be formed so as to be sandwiched between at least one surface of the outer surface of the battery cell and the inner surface of the case. For example, the foam coating layer may be coated on the inner surface of the bottom wall of the case or the inner surface of the ceiling wall. Even in the case, the battery cells can be positioned and held in the accommodation portions of the case without backlash and the assembly property and the reliability can be improved.

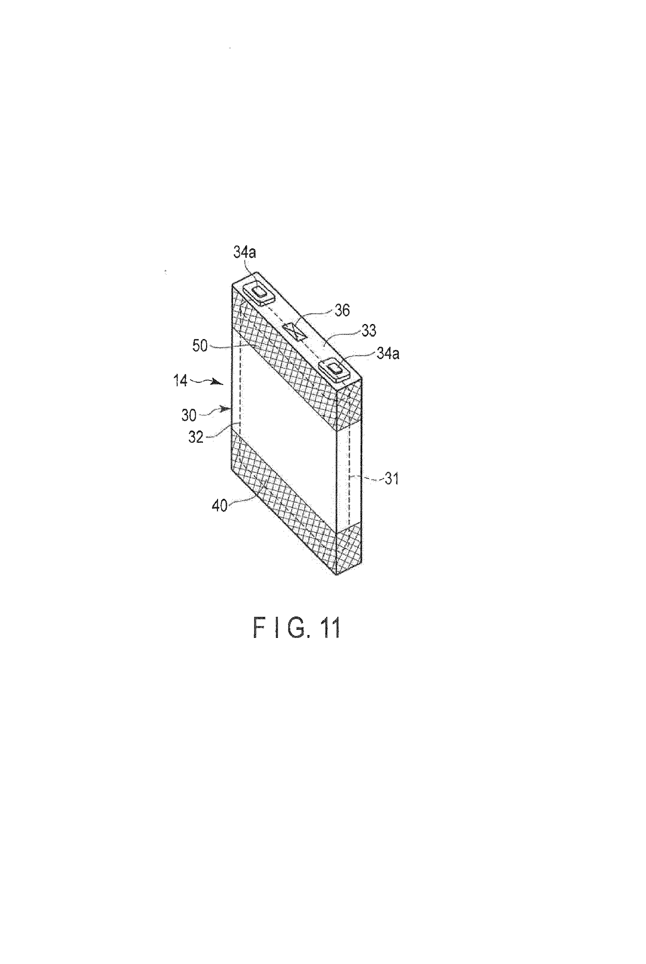

It is sufficient for the foam coating layer to be disposed so as to be sandwiched between the outer surfaces of the battery cells and the inner surface of the case, and the foam coating layers 40, 50 may be coated and formed on the outer surfaces of the battery cells 14 as illustrated in FIG. 11 in addition to that they are coated and formed on the inner surface of the case. Also in the case, the foam coating layer comes into intimate contact with the inner surface of the case, sandwiched between the outer surface of the battery cell and the inner surface of the case so that the battery cells can be positioned and held without backlash by mounting the battery cells 14 in the case 12. Further, the foam coating layer formed on at least a surface of the battery cell can exhibit effect.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, the plurality of battery cells are configured to be disposed in a row, they are not limited thereto and may be disposed in a plurality of rows. The number of battery cells can be increased and decreased according to a design output of the secondary battery device. Further, in the examples described above, although the case main body is configured to be integrally molded by the resin, the case main body may be formed by welding a bottom wall, sidewalls, and partition plates having been separately molded to each other.

## Claims

1. A secondary battery device **characterized by** comprising:
a secondary battery cell (14);
a case (12) configured to accommodate the secondary battery cell; and
foam coating layers (40, 50) sandwiched between an outer surface of the secondary battery cell (14) and an inner surface of the case (12) and configured to hold the secondary battery cell.

2. The secondary battery device of Claim 1, **characterized in that** the foam coating layers (40, 50) are coated on the inner surface of the case (12) and elastically abut against the outer surface of the secondary battery cell (14).

3. The secondary battery device of Claim 2, **characterized in that** the case (12) comprises a bottom wall (22) opposing a bottom of the secondary battery cell (14), a pair of first sidewalls (24a, 24b) standingly disposed along two opposite side edges of the bottom wall and opposing side surfaces of the secondary battery cell, a pair of second sidewalls (26a, 26b) standingly disposed along another two opposite side edges of the bottom wall and opposing main surfaces of the secondary battery cell, and a ceiling wall (18b) opposing an upper end surface of the secondary battery cell, and
the foam coating layers (40, 50) are coated on an inner surface of the bottom wall (22) or an inner surface of the ceiling wall (18b) and come into contact with the bottom or the upper end surface of the secondary battery cell.

4. The secondary battery device of Claim 3, **characterized in that** the foam coating layers (40, 50) are coated on the inner surface of the bottom wall (22) and the inner surface of the ceiling wall (18b) and come into contact with the bottom and the upper end surface of the secondary battery cell (14).

5. The secondary battery device of Claim 3 or 4, **characterized in that** the bottom wall (22) comprises a plurality of partition plates (23) located between the first sidewalls (24a, 24b), opposing the second sidewalls (26a, 26b) approximately in parallel therewith, disposed side by side at intervals, and opposing main surfaces of the secondary battery cell (14), and the ceiling wall (18b) comprises a plurality of partition plates (42) located between the first sidewalls, opposing the second sidewalls approximately in parallel therewith, disposed side by side at intervals, and opposing main surfaces of the secondary battery cell (14), and
the foam coating layers (40, 50) are coated on surfaces of the partition plates.

6. The secondary battery device of Claim 1, **characterized in that** the foam coating layers (40, 50) are coated on an outer surface of the secondary battery cell (14) and abut against the inner surface of the case (12).

7. The secondary battery device of any one of Claims 1 to 4, and 6, **characterized in that** the foam coating layers (40, 50) contain a number of independent bubbles.

8. The secondary battery device of Claim 7, **characterized in that** the foam coating layers comprise a binder component which includes polyol containing a hydroxyl group and a curing agent containing an isocyanate group, a binder-cured coating film has a universal hardness of 10N/mm² or less and an elastic deformation ratio (We/Wtot) of 80% or more, 3 to 20% foaming particles are contained to a resin solid content of the binder component, and a foaming temperature range of the foaming particles is 70 to 160°C.

9. The secondary battery device of any one of Claims 1 to 4, **characterized in that** the foam coating layers comprise a binder component which includes polyol containing a hydroxyl group and a curing agent containing an isocyanate group, a binder-cured coating film has a universal hardness of 10N/mm² or less and an elastic deformation ratio (We/Wtot) of 80% or more, 3 to 20% foaming particles are contained to a resin solid content of the binder component, and a foaming temperature range of the foaming particles is 70 to 160°C.
